(19) Europäisches Patentamt
European Patent Office
Office européen des brevets

(11) **EP 2 463 841 A1**

(12) **EUROPEAN PATENT APPLICATION**
published in accordance with Art. 153(4) EPC

(43) Date of publication:
**13.06.2012 Bulletin 2012/24**

(51) Int Cl.:
***G08C 15/00*** *(2006.01)*

(21) Application number: **10806263.9**

(22) Date of filing: **17.02.2010**

(86) International application number:
**PCT/JP2010/052346**

(87) International publication number:
**WO 2011/016263 (10.02.2011 Gazette 2011/06)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.08.2009 JP 2009181666**

(71) Applicant: **Omron Corporation**
**Kyoto-shi, Kyoto 600-8530 (JP)**

(72) Inventors:
• **NAITO, Shinji**
**Kyoto-shi**
**Kyoto 600-8530 (JP)**
• **IWAHASHI, Naomasa**
**Kyoto-shi**
**Kyoto 600-8530 (JP)**

(74) Representative: **Wilhelms · Kilian & Partner**
**Patentanwälte**
**Eduard-Schmid-Straße 2**
**81541 München (DE)**

(54) **DATA COMMUNICATION SYSTEM, DATA COMMUNICATION METHOD, SENSOR AND SENSOR CONTROL DEVICE**

(57) A sensor makes the second measurement (YES in S17), and calculates an absolute value of the difference between a generated second measured value and a first predicted value for the measured value (S20). If the absolute value of the difference for the measured value is greater than a first predetermined value, data of the measured value is transmitted to a server 31 (S21). Based on the transmitted measured value, the server 31 generates the second measured value (S22). Then, the next predicted value is generated based on the first predicted value and the second measured value. An absolute value of the difference between each of the second predicted values and each of the first predicted values is calculated (S24). If the absolute value of the difference is greater than a second predetermined value, the difference is transmitted to the sensor 21 (S25). The sensor 21 generates the next predicted value based on the transmitted difference (S26).

FIG.2

**Description**

Technical Field

This invention relates to data communication systems, data communication methods, sensors and sensor control devices, and more particularly to a data communication system establishing communications between a sensor, which measures power consumption or the like of a machine press, and a sensor control device, which manages the measured values obtained by the sensor in the form of data, and a data communication method, a sensor and a sensor control device used for the data communication system.

Background Art

Conventionally, for example, control of the power consumption of machine presses and the temperature of rooms in factories is made by, first, measuring the electric power data of the machine presses and the temperature data of the rooms with sensors and, secondly, transmitting the measured values obtained by the sensors to a server or other types of data management apparatuses in the form of data. The server accumulates the data of the measured values transmitted by the sensors and manages the measured values as data.

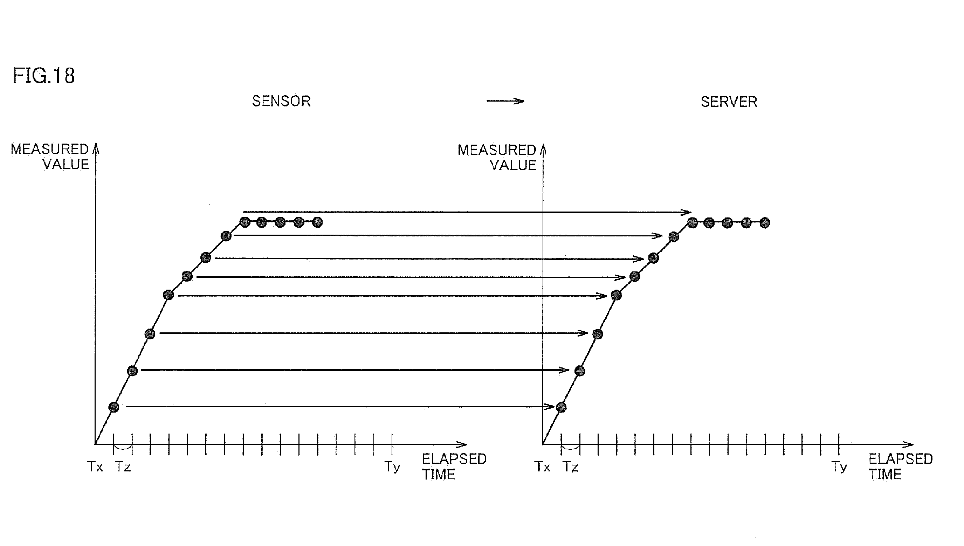

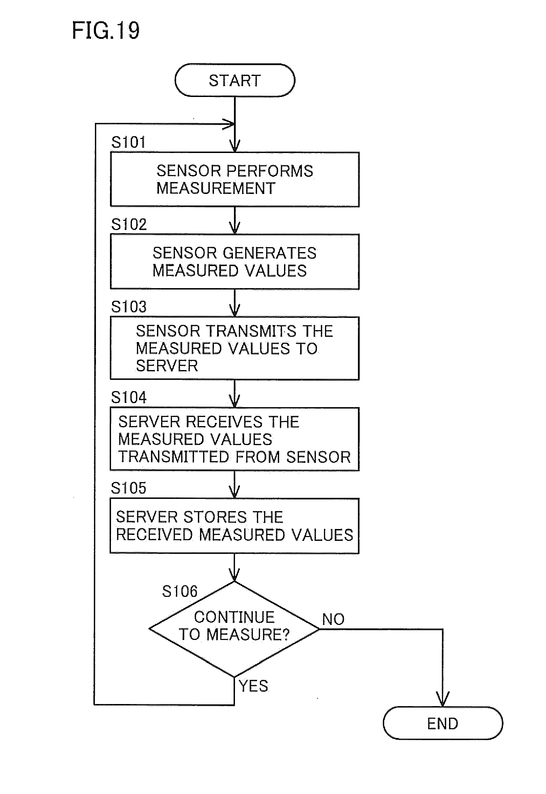

A brief description will be made about the process flow performed by such a conventional data communication system with reference to FIGS. 18 and 19. FIG. 18 is a graph showing the relationship between values measured by a sensor in a conventional system and time elapsed from the start to the end of the measurement. The graph in FIG. 18 has a vertical axis representing the measured values and a horizontal axis representing the elapsed time. On the graph in FIG. 18, the measured values are plotted to increment in the upward direction along the vertical axis, while the time is plotted to elapse in the rightward direction along the horizontal axis. In this graph, a duration from Time $T_X$ to Time $T_Y$ is defined as a period, and measured values are sampled at Time Intervals Tz, in other words, measurement is performed at Time Intervals $T_Z$ to obtain measured values. The graph on the left in FIG. 18 shows the measured values obtained by the sensor and the graph on the right shows the measured-value data received by the server. FIG. 19 is a flow chart showing a process flow performed by a conventional data communication system.

Referring to FIGS. 18 and 19, the sensor performs measurement upon reaching sampling time (Step S101 in FIG. 19, hereinafter, "Step" is omitted). The sensor generates data of the measured values to be transmitted (S102). Then, the sensor transmits the generated measured-value data to the server (S103). The server receives the measured-value data transmitted from the sensor (S104), and stores the measured-value data in a storage unit in the server (S105). These steps are repeated until all measurement operations are finished, specifically, until Time $T_Y$ (S106).

Japanese Unexamined Patent Application Publications No. 3-201631 (PTL 1) and No. 2008-59302 (PTL 2) disclose techniques of managing data using wireless communications.

Citation List

Patent Literature

PTL 1: Japanese Unexamined Patent Application Publication No. 3-201631
PTL 2: Japanese Unexamined Patent Application Publication No. 2008-59302

Summary of Invention

Technical Problem

According to the conventional systems as shown in FIGS. 18 and 19, the sensor is configured to transmit the measured-value data to the server after every measurement, and the server is configured to receive and store all of the transmitted measured-value data. This configuration increases the number of transmissions and receptions as the sampling time duration is shortened, resulting in a large number of communications. In the case where one server manages data transmitted from a plurality of sensors, the server has to bear a large burden in terms of communication and data storage; this is an unfavorable situation.

In data management by the thus configured sensors and server, the server needs to execute communication management, e.g., port management the same number of times as the number of the sensors making data communications. Such communication control also places a large burden on the server.

Data communications include upstream communications in which data is transmitted from a sensor to a server and downstream communications in which data is transmitted from a server to a sensor. In the above-described conventional configuration in which the sensor generates the data of the measured values, the number of upstream communications increases and the communication data heavily flows in the upstream channel. On the other hand, the downstream channel is used only to transmit control signals for controlling the sensor. Compared with the upstream traffic, the communication data on the downstream channel is very small. Such a situation causes unfavorable communication inefficiency. Especially for data communications using ADSL (Asymmetric Digital Subscriber Line) whose downstream band is set larger than the upstream band, feeding more data to the narrower upstream band deteriorates communication efficiency.

In PTL 1, when the amount of change in value from an input signal numeric value converted from an input signal obtained in response to the last transmission instruction signal is smaller than a set value D, a new transmission instruction signal is not issued until a transmission instruction inhibiting time T elapses. In this manner, the data volume and traffic volume are reduced.

According to PTL 2, only when it is recognized that the measured-value data has changed more than a predetermined value, the measured-value data is determined as measured-value data necessary to be transmitted wirelessly and is saved in a memory.

Both PTL 1 and PTL 2 compare a predetermined value and a measured value obtained by a sensor and determine whether to transmit the measured-value data based on whether the difference is greater than the predetermined value. However, if the predetermined value is not an appropriate value, this method impairs communication efficiency, and it can be said that this method provides almost the same effect as the conventional configuration.

Specifically speaking, if the actually measured value is greatly different from the predetermined value, the sensor frequently determines transmission of the measured-value data and transmits the data many times, resulting in no difference from the conventional systems.

An object of the present invention is to provide a data communication system enabling efficient communications.

Another object of the invention is to provide a data communication method enabling efficient communications.

Yet another object of the invention is to provide a sensor enabling efficient communications.

Yet another object of the invention is to provide a sensor control device enabling efficient communications.

Solution to Problem

A data communication system according to the present invention includes a sensor configured to measure a given state and a sensor control device capable of communicating with the sensor. The sensor includes a measurement unit configured to measure the given state at a predetermined time, a predicted-value retention unit configured to retain a predicted value of the given state transmitted from the sensor control device, a calculation unit configured to calculate data to be transmitted to the sensor control device based on a measured value obtained by the measurement unit and the predicted value retained by the predicted-value retention unit, and a first transmission unit configured to transmit the data obtained by the calculation unit to the sensor control device. The sensor control device includes a measured-value generation unit configured to generate a measured value obtained by the sensor based on the data transmitted from the first transmission unit and the predicted value, a storage unit configured to store the measured value generated by the measured-value generation unit, a predicted-value generation unit configured to generate a predicted value of a measured value to be measured next based on the measured value, and a second transmission unit configured to transmit data of the predicted value generated by the predicted-value generation unit to the sensor.

According to the configuration, the sensor calculates data to be transmitted to the sensor control device based on the measured value and predicted value. The calculated data is transmitted to the sensor control device. The sensor control device generates a predicted value of a measured value to be measured next based on the transmitted data and transmits the predicted value to the sensor. Since an actually measured value, or, an actually measured value affects the next predicted value, the predicted value is corrected to a value close to the actually measured value. In short, the predicted value according to the present invention is not fixed to a static value as used in PTL 1 and PTL 2, but is a dynamic value obtained based on the actually measured value. Such a data communication system can enhance the accuracy of the predicted value and perform efficient communications by utilizing the downstream communication channel from the sensor control device to the sensor.

In this description, the "given state" denotes a state, measurable by the sensor, of an apparatus or an environment. When a machine press is used as an apparatus, for example, the given state denotes power consumed by the machine press during pressing operations.

Preferably, the sensor control device includes a control unit configured to compare the newly predicted value generated by the predicted-value generation unit and a predetermined value and determine whether to transmit the data according to the comparison result.

More preferably, the calculation unit calculates the difference between the measured value obtained by the measurement unit and the predicted value retained by the predicted-value retention unit, and the measured-value generation unit generates a measured value from the data of the difference.

More preferably, the second transmission unit calculates the difference between the predicted value generated by the predicted-value generation unit and the last predicted value and transmits the data of the difference between the predicted values to the sensor, and the predicted-value retention unit calculates a next predicted value from the data of the difference between the predicted values and retains the next predicted value.

In a further preferable embodiment, the predicted-value generation unit generates a predicted value according to weights assigned to the measured value.

In another aspect of the present invention, a data communication method for transmitting data of measured values obtained by a sensor to a sensor control device includes the steps of measuring, by the sensor, a given state at a predetermined time, retaining a predicted value of the given state transmitted from the sensor control device in the sensor, calculating data to be transmitted to the sensor control device based on the measured value obtained in the measuring step and the predicted value retained in the predicted-value retaining step, firstly transmitting the data obtained in the calculating step to the sensor control device, generating, by the sensor control device, a measured value obtained by the sensor based on the data transmitted in the first transmitting step and the predicted value, storing the measured value generated in the measured-value generating step, generating a predicted value of a measured value to be measured next based on the measured value, and secondly transmitting data of the predicted value generated in the predicted-value generating step to the sensor.

In yet another aspect of the present invention, a sensor is to measure a given state and includes a measurement unit configured to measure a given state at a predetermined time, a predicted-value retention unit configured to retain the predicted value of the given state transmitted from a sensor control device capable of communicating with the sensor, a calculation unit configured to calculate data to be transmitted to the sensor control device based on the measured value obtained by the measurement unit and the predicted value retained by the predicted-value retention unit, and a transmission unit configured to transmit the data calculated by the calculation unit to the sensor control device.

In yet another aspect of the present invention, a sensor control device is capable of communicating with a sensor for measuring a given state and includes a measured-value generation unit configured to generate a measured value obtained by the sensor, upon reception of data transmitted from the sensor, based on the data and a predicted value, a storage unit configured to store the measured value generated by the measured-value generation unit, a predicted-value generation unit configured to generate a predicted value of a measured value to be measured next based on the measured value, and a transmission unit configured to transmit data of the predicted value generated by the predicted-value generation unit to the sensor.

Advantageous Effects of Invention

According to the configurations, the sensor calculates data to be transmitted to the sensor control device based on the measured value and predicted value and then transmits the calculated data to the sensor control device. The sensor control device generates a predicted value of a measured value to be measured next based on the transmitted data and transmits the predicted value to the sensor. Since an actually measured value affects the next predicted value, the predicted value is corrected to a value close to the actually measured value. In short, the predicted value according to the present invention is not fixed to a static value as used in PTL 1 and PTL 2, but is a dynamic value obtained based on the actually measured value. Such a data communication system can enhance the accuracy of the predicted value and perform efficient communications by utilizing the downstream communication channel from the sensor control device to the sensor.

In addition, the data communication method, sensor and sensor control device according to the present invention also can improve communication efficiency.

Brief Description of Drawings

[FIG. 1] FIG. 1 is a block diagram showing the configuration of a data communication system according to an embodiment of the invention.

[FIG. 2] FIG. 2 is a flow chart showing steps of exchanging data in the data communication system according to the embodiment of the invention.

[FIG. 3] FIG. 3 is a sequence diagram showing data exchange between a sensor and a server in the data communication system according to the embodiment of the invention.

[FIG. 4] FIG. 4 includes graphs showing a state where data is transmitted from the sensor to server after the first measurement.

[FIG. 5] FIG. 5 includes graphs showing predicted values generated by the server.

[FIG. 6] FIG. 6 includes graphs showing a state where the predicted values generated by the server are transmitted to the sensor.

[FIG. 7] FIG. 7 is a graph showing a state where data is transmitted from the sensor to the server after the second measurement.

[FIG. 8] FIG. 8 includes graphs to determine whether to transmit the data.

[FIG. 9] FIG. 9 includes graphs showing the second proven values generated by the server.

[FIG. 10] FIG. 10 includes graphs showing the second predicted values generated by the server.

[FIG. 11] FIG. 11 includes graphs showing the difference between the first predicted values and the second predicted values.

[FIG. 12] FIG. 12 includes graphs showing the second predicted values generated by the sensor.

[FIG. 13] FIG. 13 includes graphs showing the third proven values generated by the server.

[FIG. 14] FIG. 14 is a graph showing proven values and predicted values calculated by a weighting method.

[FIG. 15] FIG. 15 is a graph showing the relationship between power consumed to manufacture products and time elapsed.

[FIG. 16] FIG. 16 is a graph showing the relationship between cleanliness measured by a particle sensor and time elapsed.

[FIG. 17] FIG. 17 is a graph showing the relationship between proven values when the period has changed in the middle of measurement and time elapsed.

[FIG. 18] FIG. 18 includes graphs showing a communication state between a conventional sensor and server.

[FIG. 19] FIG. 19 is a flow chart showing steps of exchanging data between the conventional sensor and server.

Description of Embodiments

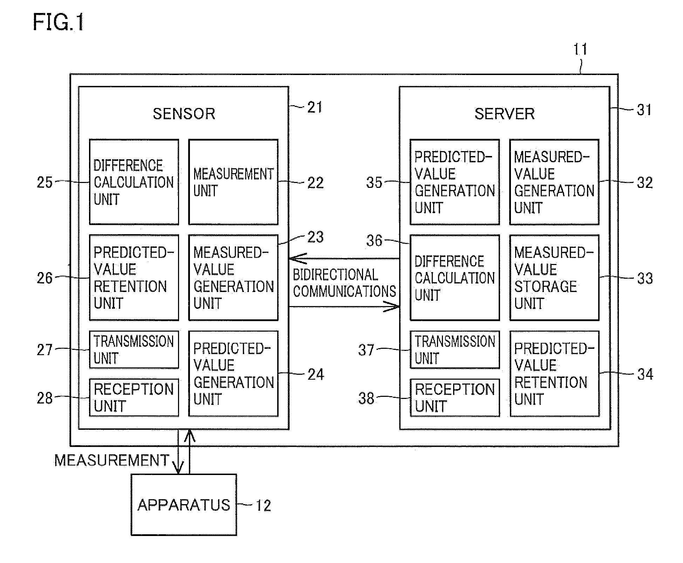

An embodiment of the present invention will be described with reference to the drawings. First of all, the configuration of a data communication system according to the embodiment of the present invention will be described. FIG. 1 is a block diagram showing the configuration of the data communication system according to the embodiment of the invention.

Referring to FIG. 1, a data communication system 11 includes a sensor 21 that measures a state of an intended apparatus 12 with periodicity, and a server 31, serving as a sensor control device, that manages measured values obtained by the sensor 21. Supposing the intended apparatus 12 is a machine press, the data communication system 11 is a power monitor that detects how much power the machine press consumes. In addition to that, the data communication system 11 can be applied to cases where the sensor 21 measures current values and voltage values of the apparatus, temperature and humidity of rooms, cleanliness of clean rooms, and viscosity or the like of solutions.

The sensor 21 and server 31 can communicate with each other by radio. As shown by arrows in FIG. 1, bidirectional wireless communications can be established between the sensor 21 and server 31.

Next, specific configuration of the sensor 21 will be described. The sensor 21 includes a measurement unit 22, serving as measurement means, that measures a state of the apparatus 12, a measured-value generation unit 23 that generates a measured value, a predicted-value generation unit 24 that generates the next predicted value as described later, a difference calculation unit 25, serving as calculation means for calculating data to be transmitted to the server 31 based on the measured value and predicted value, that calculates the absolute value of the difference between the measured value and predicted value, and a predicted-value retention unit 26 that retains the last predicted value. The sensor 21 also includes a transmission unit 27 that transmits data and a reception unit 28 that receives data.

The server 31 includes a measured-value generation unit 32 that generates a measured value, a measured-value storage unit 33 that stores the measured value, a predicted-value retention unit 34 that retains the last predicted value, a predicted-value generation unit 35 that generates the next predicted value, and a difference calculation unit 36 that calculates the absolute value of the difference between the last predicted value and the next predicted value. The server 31 also includes a transmission unit 37 that transmits data and a reception unit 38 that receives data.

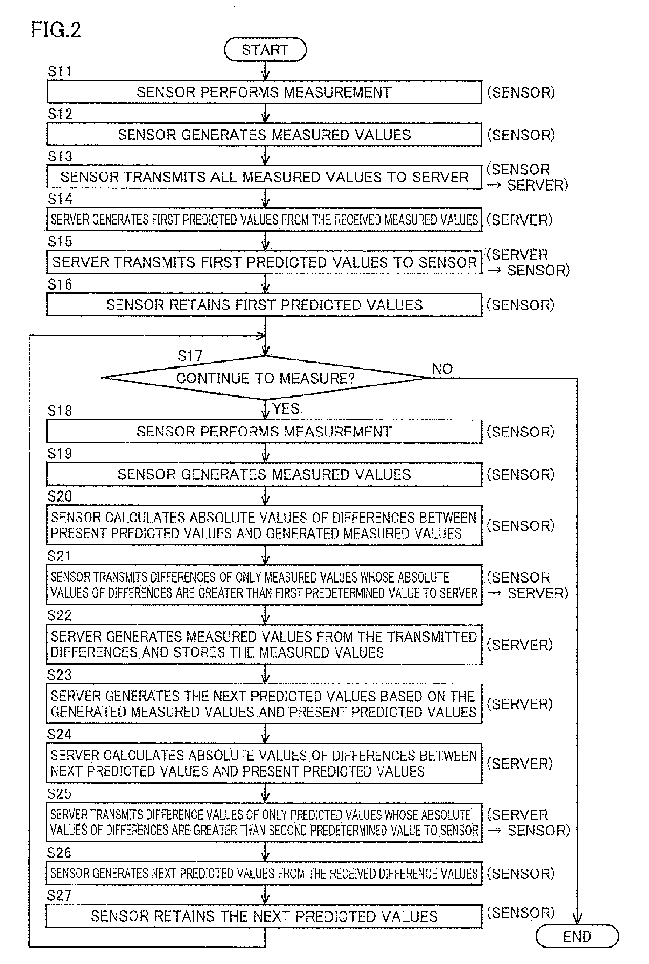

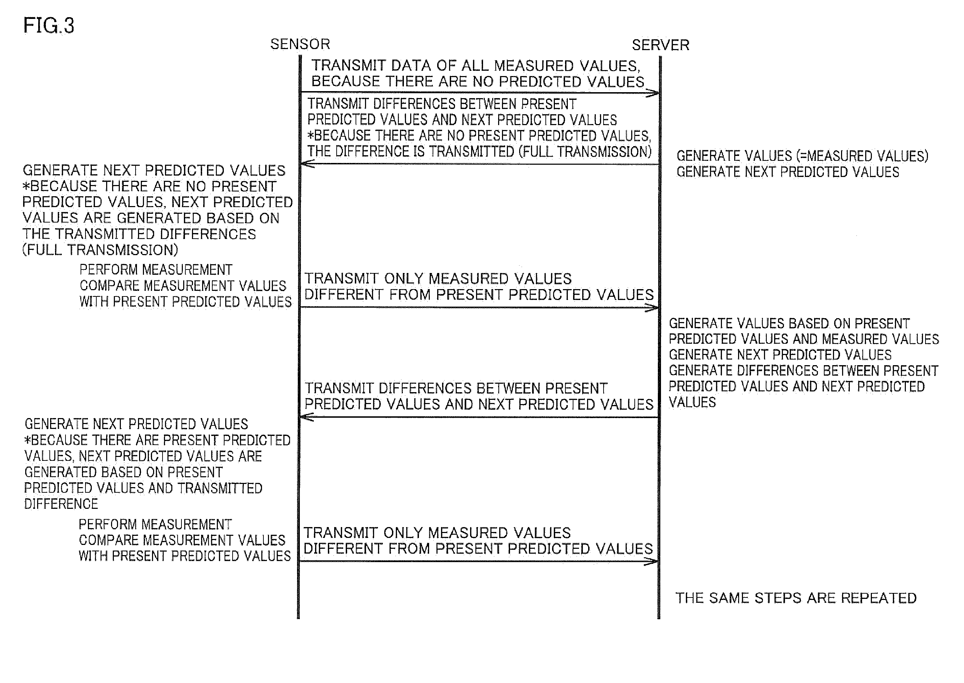

With the thus configured data communication system 11, a data communication method according to the embodiment of the present invention will be described. FIG. 2 is a flow chart showing the steps for exchanging data in the data communication system 11 according to the embodiment of the invention. FIG. 3 is a sequence diagram showing transmission and reception, i.e., exchange, of data between the sensor 21 and server 31.

Referring to FIGS. 1 to 3, the data communication method used in the data communication system according to the embodiment of the invention will be described. This description shows data exchanges performed in a period. In this embodiment, 16 samples are taken from Time Intervals $T_Z$ in a period from Time $T_X$ to Time $T_Y$. In other words, a total of 16 measured values are obtained within the period from $T_X$ to $T_Y$. The samples are referred to as $D_1$, $D_2$, to $D_{16}$, respectively, in the order from the shortest time elapsed from $T_X$.

First, the sensor 21 makes the first measurement of the apparatus 12 (Step S11 in FIG. 2, hereinafter, "Step" will be omitted). Then, the sensor 21 generates measured values for a period based on the measurement results obtained from the first measurement (S12).

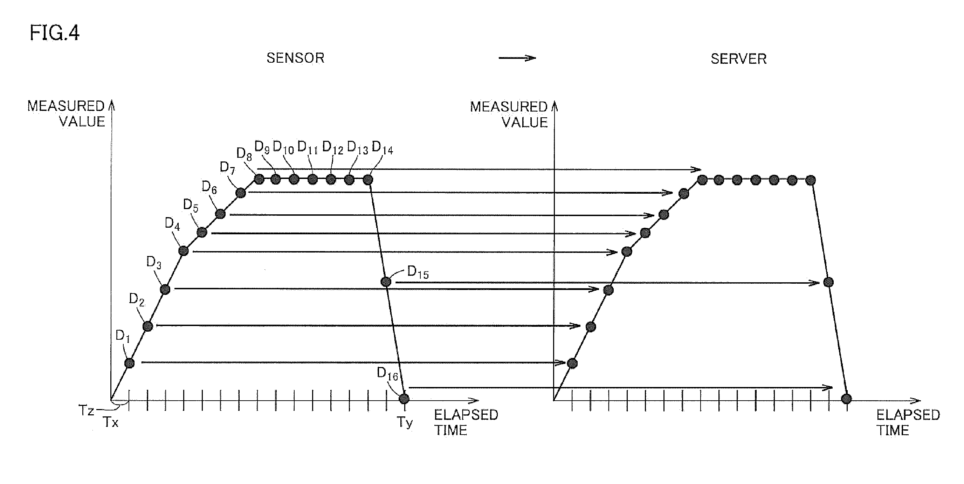

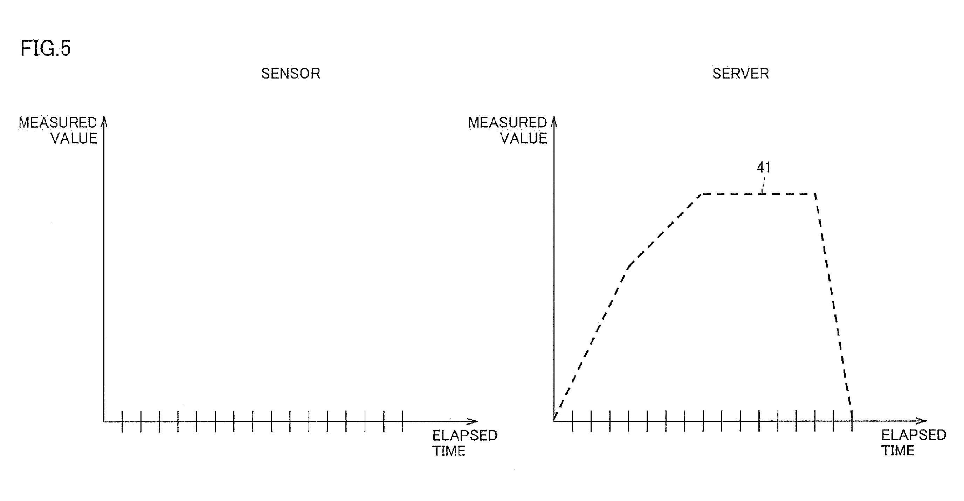

Then, data of the measured values for the cycle is transmitted to the server 31. Since the measured-value data is obtained by the sensor 21 through the first measurement, the data of all the measured values is transmitted to the server 31 (S13). Specifically, the 16 measured data values obtained in one period are all transmitted. FIG. 4, corresponding to FIG. 18, illustrates the state of the transmitted data at this stage. The graph layout, i.e., the vertical axis and horizontal axis in FIG. 4 represent the same as those in FIG. 18. Referring to FIG. 4, the measured data values $D_1$ to $D_{16}$ are all transmitted to the server 31 without being changed. Note that the graph layout in the following FIGS. 5 to 12 is the same as that in FIG. 4.

The server 31 generates measured values associated with the first measurement from all the received measured-value data. Because all the measured-value data has been obtained through the first measurement, the transmitted data of all the 16 measured values is defined as the first measured values as they are. Then, the generated measured values for the period are stored.

Next, next predicted values (referred to as "first predicted value" in this description) are generated from the received measured values (S14). Since the predicted values are to be generated based on the first measurement, the first predicted values are generated from the received measured-value data. In this description, the 16 measured data values are defined as the first predicted values as they are. FIG. 5 shows the predicted values at this stage. The graph on the right of FIG. 5 indicates the first predicted values by a dotted line 41. The first predicted values are the first measured values plotted without any changes.

The data of the generated first predicted values is transmitted from the server 31 to the sensor 21 (S15). At this stage, all the first predicted data values are transmitted to the sensor 21, because the first predicted values are the predicted values obtained for the first time and there are no previous predicted values to be compared with, as shown in FIG. 4.

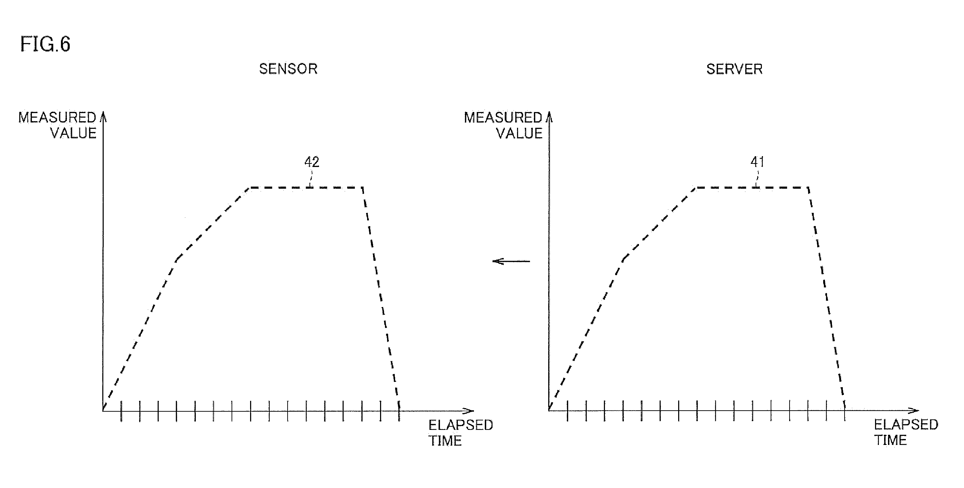

The sensor 21 receives the data of the first predicted values and generates next predicted values (S16). Since the predicted values are the first predicted values transmitted for the first time, the first predicted values are retained in the sensor 21 as the next predicted values without being changed. FIG. 6 illustrates the predicted values at this stage. A dotted line 42 in FIG. 6 indicates the first predicted values.

Then, the second measurement is performed (YES in S17). The second measurement begins by the sensor 21 obtaining values for one period again (S18) and then generating measured values from the obtained values (S19).

At this stage, an absolute value of a difference between the first predicted value and the second measured value is calculated for every generated measured value (S20). The calculations of the absolute values of the differences are made for each sample. Specifically, an absolute value of the difference between each of the first predicted data values and each of the generated measured data values is calculated.

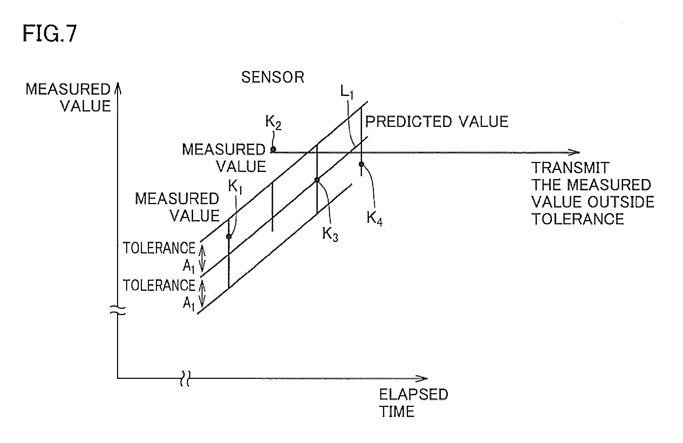

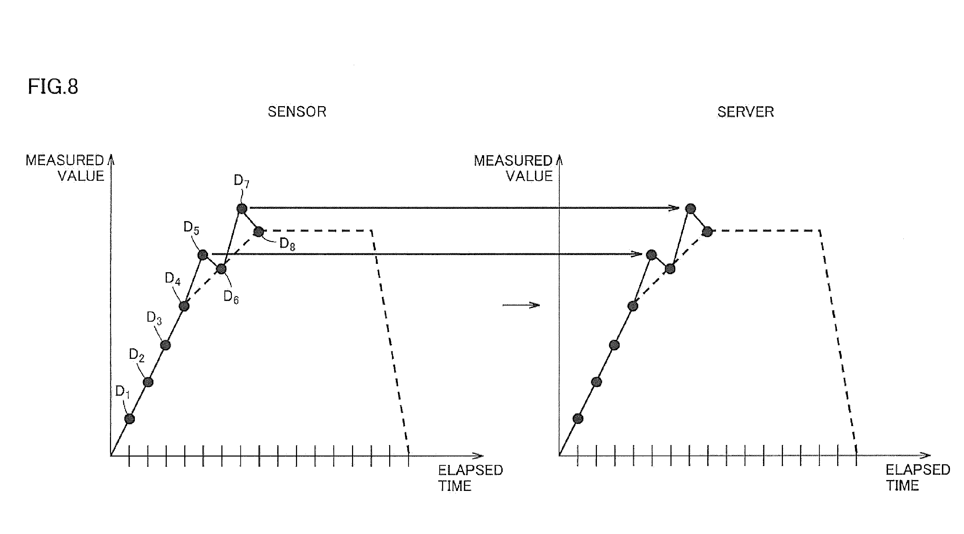

Then, it is determined whether the absolute value of the difference is greater than a first predetermined value. Specifically, it is determined whether the absolute value of the difference |predicted value - measured value | is greater than a tolerance $A_1$, which is the first predetermined value. After determination, data of the measured values whose absolute values of the differences are greater than the tolerance $A_1$ is transmitted to the server 31 (S21). On the other hand, data of the measured values whose absolute values of the differences are equal to or smaller than the tolerance $A_1$ is not transmitted to the server 31. FIG. 7 is a graph showing the case. Referring to FIG. 7, with respect to predicted values $L_1$, the data of the measured values $K_1$, $K_3$, $K_4$ whose absolute values of the differences |predicted value - measured value | are equal to or smaller than the tolerance $A_1$, which is the first predetermined value, is not transmitted. However, only the data of measured value $K_2$ whose absolute value of the difference |predicted value - measured value | is greater than the tolerance $A_1$, which is the first predetermined value, is transmitted. FIG. 8 is a graph of this case. Specifically, since the data values of $D_1$, $D_2$, $D_3$, $D_4$, $D_6$, $D_8$ have absolute values of the differences equal to or smaller than the tolerance $A_1$, the data corresponding to $D_1$, $D_2$, $D_3$, $D_4$, $D_6$, $D_8$ is not transmitted, but since the data values of $D_5$, $D_7$ have absolute values of the differences greater than the tolerance $A_1$, the data corresponding to $D_5$, $D_7$ is transmitted.

In this data transmission, the sensor transmits data including the difference and identification corresponding to the data, i.e., the elapsed time and the difference expressed by (predicted value - measured value) to make a request to the server 31 for generating new predicted values based on the measured values.

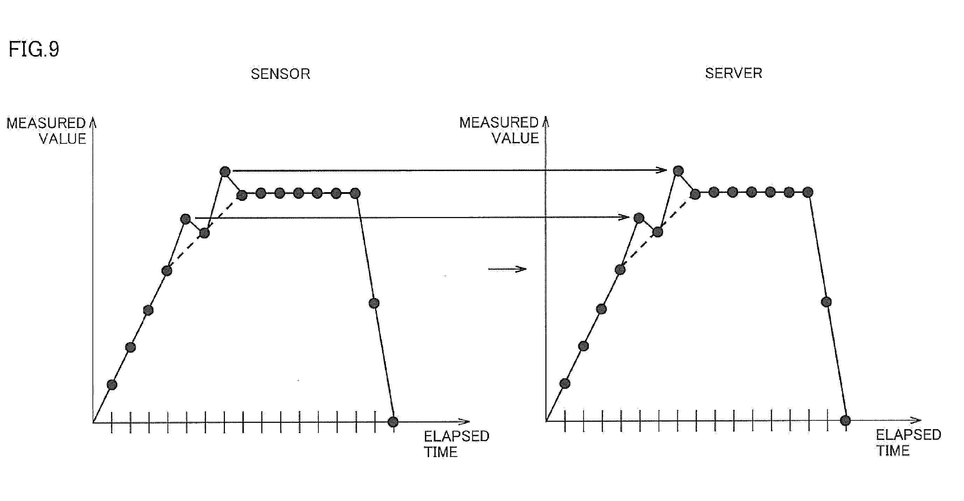

Based on the transmitted data, the server 31 generates second measured values (S22). The second measured values are generated as follows. Upon reception of the data, that is, the difference and identification of the corresponding data, transmitted from the sensor 21, the server 31 generates measured values based on the values obtained from the data and the first predicted values. If such data is not transmitted by the sensor 21 and received by the server 31, the first predicted values are used as measured values. In this embodiment, the server 31 calculates measured values of $D_5$, $D_7$ based on the transmitted difference data and other data, but the first predicted values are used as they are for the other data. In this manner, the second measured values are generated. FIG. 9 includes graphs showing the measured values. The generated second measured values are stored in a storage unit.

Next, the next predicted values (referred to as "second predicted value" in this description) are generated (S23).

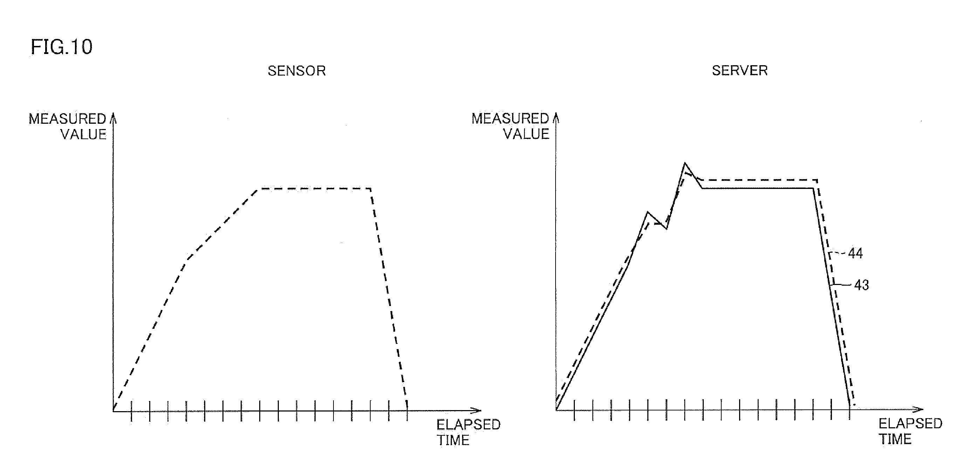

The second predicted values are generated based on the first predicted values and the second measured values. FIG. 10 includes graphs showing the predicted values. In FIG. 10, a solid line 43 indicates the generated second measured values, while a dotted line 44 indicates the data of the second predicted values generated based on the first predicted values and the second measured values. Specifically, the predicted values for $D_5$ and $D_7$ indicated by the solid line 43 are determined by the following calculation method with assignment of weights to the first predicted values and second measured values. In this description, the predicted values are obtained from between the first measured values and the second measured values.

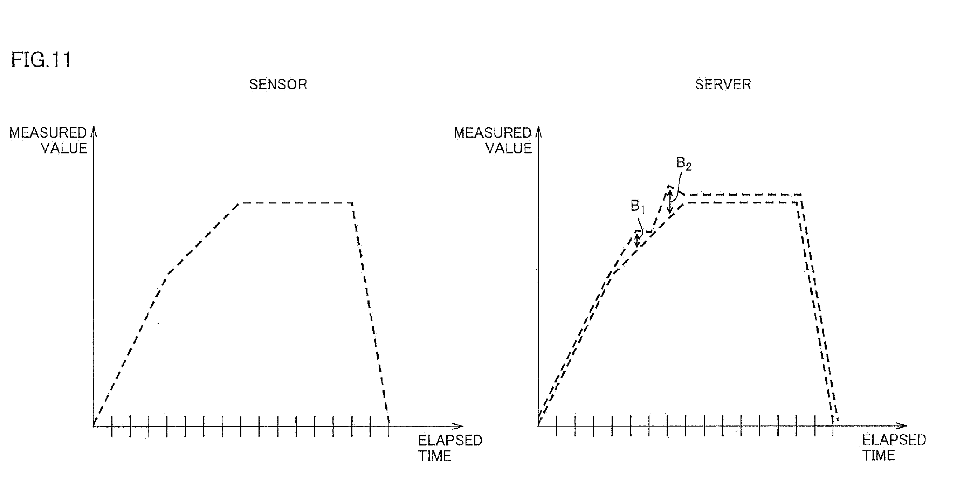

The generated second predicted values are defined as the next predicted values and stored in the server 31. The differences between the second predicted values and first predicted values are each calculated (S24). Specifically, the absolute values of the differences indicated by two-headed arrows $B_1$, $B_2$ in FIG. 11 are calculated. In this description, the differences are differences between the predicted values corresponding to $D_5$ and $D_7$. When the absolute value of the difference is greater than a second predetermined value $A_2$ (not shown), the difference is transmitted to the sensor 21 (S25). When the absolute value of the difference is equal to or smaller than the second predetermined value, the data is not transmitted to the sensor 21. In short, the server 31 compares the generated new predicted values and the second predetermined value to determine whether to transmit the data to the sensor 21 based on the comparison results.

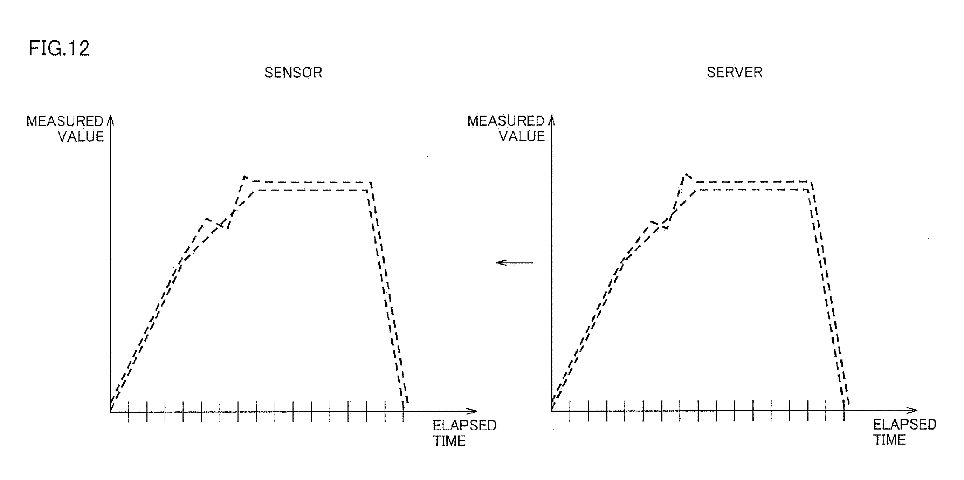

The sensor 21 generates the next predicted values, i.e., the second predicted values, based on the transmitted difference (S26). If the difference is transmitted, the sensor 21 generates the second predicted values from the first predicted values with the transmitted difference data. If the difference is not transmitted, the sensor 21 generates the second predicted values based on the first predicted values. More clearly, the first predicted values are updated into the second predicted values by reflecting the first measured values in the first predicted values. This is shown in graphs of FIG. 12. The sensor 21 retains the second predicted values (S27).

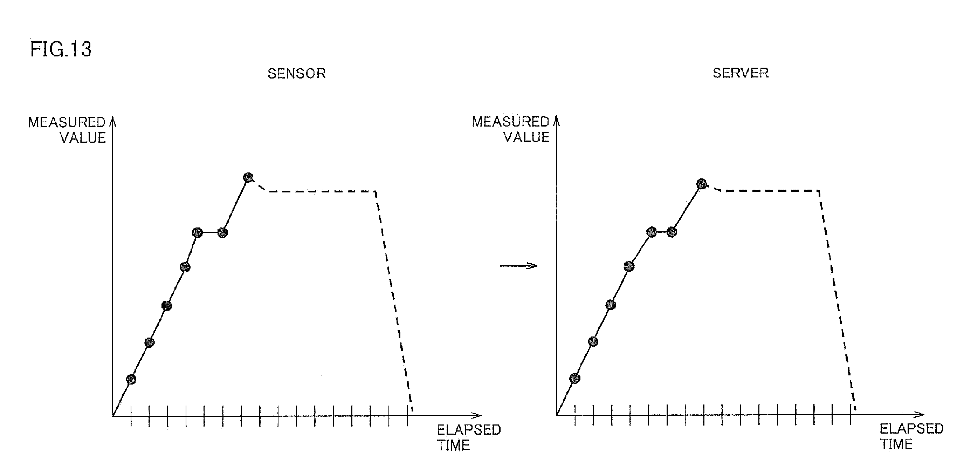

Subsequently, the sensor 21 makes the third measurement and generates measured values again. The sensor 21 then calculates the difference between the measured values and the second predicted values. If the difference is greater than a predetermined value, the sensor determines to transmit only the corresponding data to the server 31. In this manner, the third measured values are generated and stored in the server 31. FIG. 13 shows the measured values.

From then on, the aforementioned steps S17 to S26 are repeated until measurement is finished (S17), and then, measurement is finished.

According to the configuration, the sensor calculates data to be transmitted to the sensor control device based on the measured values and predicted values. The calculated data is transmitted to the sensor control device. The sensor control device generates predicted values of measured values to be measured next based on the transmitted data and transmits the predicted values to the sensor. Since actually measured values affect the next predicted values, the predicted values are corrected to be close to the actually measured values. In short, the predicted values according to the present invention are not fixed to static values as used in PTL 1 and PTL 2, but are dynamic values based on the actually measured values. Such a data communication system can enhance the accuracy of the predicted values and perform efficient communications by utilizing the downstream communication channel from the sensor control device to the sensor.

In addition, the data communication method according to the present invention is configured to transmit data of measured values obtained by a sensor to a sensor control device and includes the steps of measuring, by the sensor, a given state at a predetermined time, retaining the predicted value of the given state transmitted from the sensor control device in the sensor, calculating data to be transmitted to the sensor control device based on the measured value obtained in the measuring step and the predicted value retained in the predicted-value retaining step, firstly transmitting the data obtained in the calculating step to the sensor control device, generating, by the sensor control device, a measured value obtained by the sensor based on the data transmitted in the first transmitting step and the predicted value, storing the measured value generated in the measured-value generating step, generating a predicted value of a measured value to be measured next based on the measured value, and secondly transmitting data of the predicted value generated in the predicted-value generating step to the sensor.

The sensor according to the present invention is configured to measure a given state and includes a measurement unit configured to measure the given state at a predetermined time, a predicted-value retention unit configured to retain the predicted value of the given state transmitted from a sensor control device capable of communicating with the sensor, a calculation unit configured to calculate data to be transmitted to the sensor control device based on the measured value obtained by the measurement unit and the predicted value retained by the predicted-value retention unit, and a transmission unit configured to transmit the data calculated by the calculation unit to the sensor control device.

In addition, the server, serving as a sensor control device, according to the present invention is capable of communicating with a sensor measuring a given state and includes a measured-value generation unit configured to generate a measured value obtained by the sensor, upon reception of data transmitted from the sensor, based on the data and a predicted value, a storage unit configured to store the measured value generated by the measured-value generation unit, a predicted-value generation unit configured to generate a predicted value of a measured value to be measured next based on the measured value, and a transmission unit configured to transmit data of the predicted value generated by the predicted-value generation unit to the sensor.

The data communication method, sensor and sensor control device according to the invention also can improve communication efficiency.

A specific example of how to determine the first predetermined value, which is a criterion to determine whether the absolute value of the difference is greater than the first predetermined value in the aforementioned S20 in FIG. 2, will be described.

Before calculating a predicted value, a period of measured-value data is calculated from the measured-value data obtained through measurement by, for example, the following method. A fast Fourier transform (FFT) is performed on the obtained measurement data to detect the frequency. Then, the period is calculated using a relational expression, a period = 1/frequency.

To obtain the next predicted value data, there are some exemplary methods: (1) a method of calculating the next predicted value by assigning weights; (2) a method of calculating the next predicted value by using the last value; (3) a method of calculating the next predicted value by averaging values; and (4) a method of defining the next predicted value with a fixed value. The following are detailed descriptions of the methods.

(1) A method of calculating the next predicted value by assigning weights will be described.

The method of determining the next predicted-value data from proven values of the measured-value data accumulated in the server uses Expression 1 below.

### Expression 1

$$F(0,t) = \sum_{n=1}^{p} \left\{ (1/2)^n \times f(n,t) \right\} + (1/2)^p \times f(1,t)$$

In Expression 1, the proven value is represented by f(n,t), and n and t denote as follows.

t: the t-th measurement within a measurement period (1 period)

n: a value indicating how many times the measurement has been done from the present measurement

Specific values of f(n,t) may be as follows.

Proven value obtained in the present measurement (0-th): f(1,t)

Proven value obtained in the measurement taken one time before the present measurement: f(2,t)

Proven value obtained in the measurement taken two times before the present measurement: f(33,t)

If the next predicted value is represented by F(0,t) and the number of times that the past proven values are used is represented by p, an exemplary method of calculating the next predicted value is shown in Table 1. If the proven values obtained through from the present measurement to the measurement taken three times before the present measurement are used, the value of p in Expression 1 is 4 because the data obtained through the four measurements is used. Table 1 shows an example when the predicted values are obtained from the past proven values obtained from the four measurements.

Table 1

| T-TH MEASUREMENT WITHIN A MEASUREMENT PERIOD | MEASUREMENT PERIOD | | | |
|---|---|---|---|---|
| | FIRST TIME (t=1) | SECOND TIME (t=2) | THIRD TIME (t=3) | FOURTH TIME (t=4) |
| PRESENT PROVEN VALUE n=1 | f(1,1)=18 | f(1,2)=20 | f(1,3)=15 | f(1,4)=12 |
| PROVEN VALUE OBTAINED IN MEASUREMENT TAKEN 1 TIME BEFORE PRESENT MEASUREMENT n=2 | f(2,1)=17 | f(2,2)=20 | f(2,3)=14 | f(2,4)=11 |

(continued)

| T-TH MEASUREMENT WITHIN A MEASUREMENT PERIOD | MEASUREMENT PERIOD | | | |
|---|---|---|---|---|
| | FIRST TIME (t=1) | SECOND TIME (t=2) | THIRD TIME (t=3) | FOURTH TIME (t=4) |
| PROVEN VALUE OBTAINED IN MEASUREMENT TAKEN 2 TIMES BEFORE PRESENT MEASUREMENT n=3 | f(3,1)=18 | f(3,2)=21 | f(3,3)=15 | f(3,4)=13 |
| PROVEN VALUE OBTAINED IN MEASUREMENT TAKEN 3 TIMES BEFORE PRESENT MEASUREMENT n=4 | f(4,1)=18 | f(4,2)=20 | f(4,3)=16 | f(4,4)=12 |
| NEXT PREDICTED VALUE n=0 | F(0,1)=17.750 | F(0,2)=20.125 | F(0,3)=14.8125 | F(0,4)=11.875 |
| CORRECTED PREDICTED-VALUE | 18 | 20 | 15 | 12 |

The determined predicted values are subjected to approximate corrections to be a multiple of the minimum unit that is a measurable limit of the sensor in order to determine appropriate values. Specifically, if sensor-measurable minimum unit is 1 and the specific value of the next predicted value is 17.750, the next predicted value is corrected to 18.

More specifically describing, the calculation method of F(0,1) where p=4 and t=1, is shown below.

$$F(0,1) = \{(1/2)^1 \times f(1,1)\} + \{(1/2)^2 \times f(2,1)\} + \{(1/2)^3 \times f(3,1)\} + \{(1/2)^4 \times f(4,1)\}$$
$$+ (1/2)^4 \times f(1,1)$$
$$= (1/2 \times 18) + (1/4 \times 17) + (1/16 \times 18) + (1/16 \times 18)$$
$$= 9 + 4.25 + 2.25 + 1.125 + 1.125$$
$$= 17.75$$

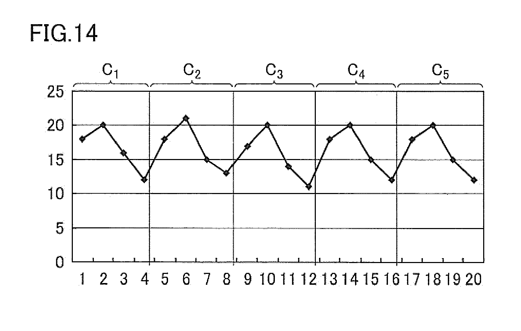

FIG. 14 shows an example of predicted values obtained from the proven values in the past four measurements. In FIG. 14, $C_1$ denotes the actually measured values three periods before the present period, $C_2$ denotes the actually measured values two periods before the present period, $C_3$ denotes actually measured values one period before the present period, $C_4$ denotes the actually measured values in the present period, and $C_5$ denotes predicted values.

(2) A method of calculating the next predicted value with the last value will be described.

The predicted values to be used for the next time are obtained from the proven values collected in the server by the following expression.

$$F(0,t) = f(1,t)$$

In this expression, the proven value is represented by f(n,t), and n and t denote as follows.

t: the t-th measurement within a measurement period (1 period)

n: a value indicating how many times the measurement has been done from the present measurement

The proven value obtained in the present measurement (0 times before the present measurement) is represented by f(1,t). The next predicted value is represented by F(0,t). The method of calculating the predicted value to be used for the next time is shown in Table 2 below.

Table 2

| T-TH MEASUREMENT WITHIN A MEASUREMENT PERIOD | MEASUREMENT PERIOD | | | |
|---|---|---|---|---|
| | FIRST TIME (t=1) | SECOND TIME (t=2) | THIRD TIME (t=3) | FOURTH TIME (t=4) |
| PRESENT PROVEN VALUE n=1 | f(1,1)=18 | f(1,2)=20 | f(1,3)=15 | f(1,4)=12 |
| NEXT PREDICTED VALUE n=0 | F(0,1)=18 | F(0,2)=20 | F(0,3)=15 | F(0,4)=12 |

(3) A method of calculating the next predicted value by averaging values will be described.

The predicted values to be used for the next time are obtained from the proven values collected in the server by Expression 2 below.

### Expression 2

$$F(0,t) = (1/p) \times \sum_{n=1}^{p} f(n,t)$$

In Expression 2, the proven value is represented by f(n,t), and n and t denote as follows.

t: the t-th measurement within a measurement period

n: a value indicating how many times the measurement has been done from the present measurement

Proven value obtained in the present measurement (0 times before the present measurement): f(1,t)

Proven value obtained in the measurement taken one time before the present measurement: f(2,t)

Proven value obtained in the measurement taken two times before the present measurement: f(3,t)

The next predicted value is represented by F(0,t). The number of times that the past proven values are used is represented by p. If the proven values obtained through from the present measurement to the measurement taken three times before the present measurement are used, the p is 4 because the data obtained through the four measurements is used. Table 3 shows an example when the predicted values are obtained from the past proven values obtained from the four measurements.

Table 3

| T-TH MEASUREMENT WITHIN A MEASUREMENT PERIOD | MEASUREMENT PERIOD | | | |
|---|---|---|---|---|
| | FIRST TIME (t=1) | SECOND TIME (t=2) | THIRD TIME (t=3) | FOURTH TIME (t=4) |
| PRESENT PROVEN VALUE n=1 | f(1,1)=18 | f(1,2)=20 | f(1,3)=15 | f(1,4)=12 |

(continued)

| | MEASUREMENT PERIOD | | | |
| --- | --- | --- | --- | --- |
| T-TH MEASUREMENT WITHIN A MEASUREMENT PERIOD | FIRST TIME (t=1) | SECOND TIME (t=2) | THIRD TIME (t=3) | FOURTH TIME (t=4) |
| PROVEN VALUE OBTAINED IN MEASUREMENT TAKEN 1 TIME BEFORE PRESENT MEASUREMENT n=2 | f(2,1)=17 | f(2,2)=20 | f(2,3)=14 | f(2,4)=11 |
| PROVEN VALUE OBTAINED IN MEASUREMENT TAKEN 2 TIMES BEFORE PRESENT MEASUREMENT n=3 | f(3,1)=18 | f(3,2)=21 | f(3,3)=15 | f(3,4)=13 |
| PROVEN VALUE OBTAINED IN MEASUREMENT TAKEN 3 TIMES BEFORE PRESENT MEASUREMENT n=4 | f(4,1)=18 | f(4,2)=20 | f(4,3)=16 | f(4,4)=12 |
| NEXT PREDICTED VALUE n=0 | F(0,1)=17.750 | F(0,1)=20.250 | F(0,1)=16.000 | F(0,1)=12.000 |
| CORRECTED PREDICTED-VALUE | 18 | 20 | 15 | 12 |

The determined predicted values are subjected to approximate corrections to be a multiple of the minimum unit that is a measurable limit of the sensor in order to determine appropriate values. Specifically, if the sensor-measurable minimum unit is 1 and the specific value of the next predicted value is "17.750", the next predicted value is corrected to "18" as described for the calculation method (1).

A more specific calculation method will be shown below.

The calculation method of F(0,1) where p=4, t=1 is shown below.

$$F(0,1) = (1/4) \times \{f(1,1)+f(2,1)+f(3,1)+f(4,1)\}$$
$$= (1/4) \times (18+17+18+18)$$
$$= 17.75$$

(4) A method of defining the next predicted value with a fixed value will be described.

The predicted value is determined without using the proven values collected in the server, but is set to a fixed value.

In short, F(0,t) is a fixed value.

In this expression, the proven value is represented by f(n,t), and n and t denote as follows.

t: the t-th measurement within a measurement period

n: a value indicating how many times the measurement has been done from the present measurement

The proven value obtained in the present measurement (0 times before the present measurement) is represented by f(1,t). The next predicted value is represented by F(0,t). The method of calculating the predicted value to be used for the next time is shown in Table 4 below.

Table 4

| T-TH MEASUREMENT WITHIN A MEASUREMENT PERIOD | MEASUREMENT PERIOD | | | |
|---|---|---|---|---|
| | FIRST TIME (t=1) | SECOND TIME (t=2) | THIRD TIME (t=3) | FOURTH TIME (t=4) |
| PRESENT PROVEN VALUE n=1 | f(1,1)=16 | f(1,2)=20 | f(1,3)=17 | f(1,4)=12 |
| NEXT PREDICTED VALUE n=0 | F(0,1)=18 FIXED VALUE | F(0,2)=20 FIXED VALUE | F(0,3)=15 FIXED VALUE | F(0,4)=12 FIXED VALUE |

In the case shown in Table 4, the next predicted values are not influenced by the present proven values.

Examples of envisioned use will be described.

(1) An example of how power consumption is measured (measurement of periodic data).

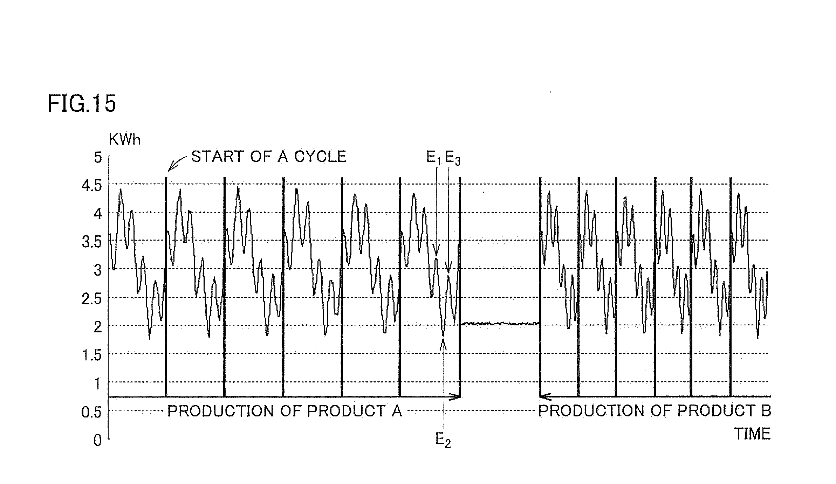

In a case where products are continuously produced by a machine press or the like, periodic waves of electric power data representing the power consumed by the machine press appear as shown in FIG. 15. In FIG. 15, the vertical axis indicates the power consumption, and the horizontal axis indicates the time elapsed. FIG. 15 also shows 6 cycles of periodic waves in production of product A and product B, whose periodicities are different from each other. In this example, the predicted values are close to the measurement values (proven values), and it is highly possible for the absolute values of the differences between the predicted values and measured values to be equal to or smaller than the tolerance. As a result, the number of sensor-to-server communications is reduced and efficient communications can be made. Specifically, FIG. 15 shows peak measured values obtained at a sampling time during production of product A. The peak measured values, indicated by arrows $E_1$, $E_2$, $E_3$, are almost the same as the measured values in the previous period and the measured values in the second previous period. Since the absolute values of the differences are equal to or smaller than the tolerance, the measured values can be generated without making communications.

(2) An example of how the air cleanliness is measured (measurement of constant data)

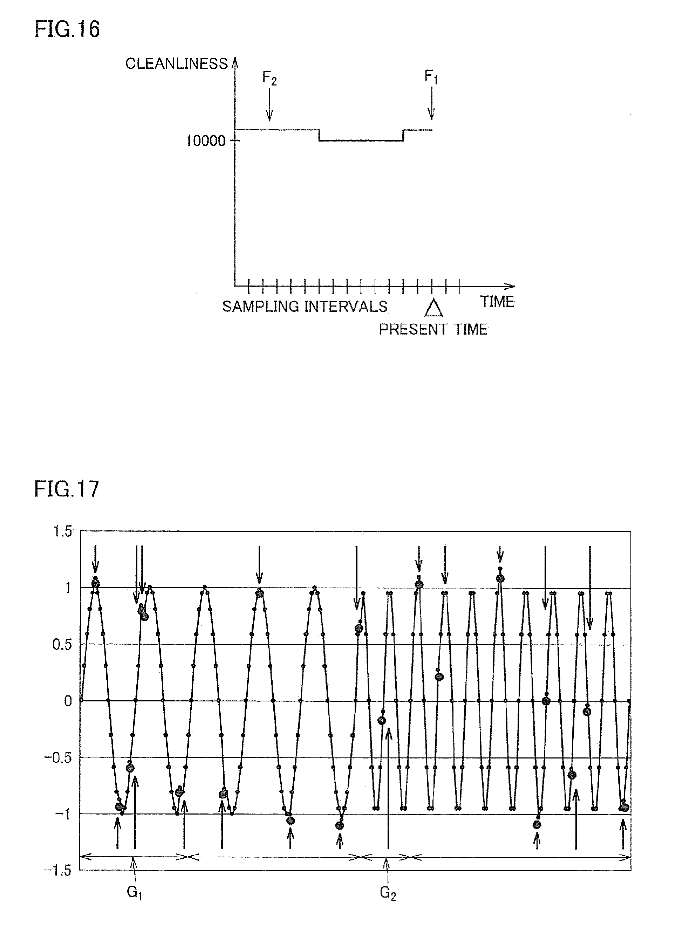

In a case where a particle sensor measures the cleanliness of a clean room, constant waves representing the cleanliness appear as shown in FIG. 16. In FIG. 16, the vertical axis indicates the measured cleanliness, and the horizontal axis indicates the time elapsed. In this example, value variations with the passage of time are small and the predicted values are close to the measurement values (proven values), and therefore it is highly possible for the absolute values of the differences between the predicted values and measured values to be equal to or smaller than the tolerance. As a result, the number of sensor-to-server communications is reduced. Specifically, the measured values, which are obtained at a sample time and indicated by an arrow $F_1$ in FIG. 16, are almost the same as the measured values, which are obtained in the previous period and indicated by an arrow $F_2$. Since the absolute values of the differences are equal to or smaller than the tolerance, the measured values can be generated without making communications.

A practical example will be described. The following are preconditions and FIG. 17 shows data of proven values obtained through measurements. In measurement of a target apparatus, the generated measured values exhibit five cycles of a sine wave and subsequently ten cycles of the sine wave whose periods are reduced to a half. The sensor conducted measurement at regular time intervals. Specifically, the sensor conducted measurement 20 times per period for the first half of the sine wave and 10 times per period for the second half of the sine wave, resulting in a total measurement of 200 times. The ratio of the data values generated outside the first and second sine waves was 10% (20 values) in total. Dots indicated with arrows in FIG. 17 are data values outside the sine waves.

Table 5 shows the communication states by a conventional method and the method of the present invention.

Table 5

| | THE NUMBER OF COMMUNICATIONS FROM SENSOR TO SERVER | THE NUMBER OF COMMUNICATIONS FROM SERVER TO SENSOR | TOTAL NUMBER OF COMMUNICATIONS |
|---|---|---|---|
| CONVENTIONAL METHOD TRANSMIT ALL MEASURED VALUES | 200 TIMES (ALL MEASURED VALUES ARE TO BE TRANSMITTED) | 0 TIME | 200 TIMERS |
| CONVENTIONAL METHOD TRANSMIT MEASURED VALUES WHEN CHANGES OCCUR | 200 TIMES (ALL MEASURED VALUES ARE TO BE TRANSMITTED BECAUSE DATA OF MEASURED OBJECT IS NOT CONSTANT) | 0 TIME | 200 TIMES |
| PRESENT INVENTIONS METHOD TRANSMIT MEASURED VALUES WHEN DIFFERENCE FROM PREDICTED VALUES ARE MADE | 80 TIMES < BREAKDOWN > DATA OUTSIDE PREDICTED VALUES: 20 TIMES DATA FOR RECOGNIZING THE FIRST HALF CYCLES: 40 TIMES DATA FOR RECOGNIZING THE SECOND HALF CYCLES: 20 TIMES | 30 TIMES < BREAKDOWN > PREDICTED-VALUE DATA FOR 1 CYCLE OF THE FIRST HALF CYCLES: 20 TIMES PREDICTED-VALUE DATA FOR 1 CYCLE OF THE SECOND HALF CYCLE: 10 TIMES | 110 TIMES |

Referring to FIG. 17 and Table 5, the conventional method requires the sensor to communicate with the server 200 times, but the present invention can reduce that to 80 times, thereby reducing communication traffic by 60%. Specifically, the number of times that the sensor transmitted data outside the prediction, indicated by the arrows in FIG. 17, is 20; the number of times that the sensor transmitted data to recognize the periods of the first half, indicated by an arrow $G_1$ in FIG. 17, is 40; and the number of times that the sensor transmitted data to recognize the periods of the second half, indicated by an arrow $G_2$ in FIG. 17, is 20; the result is that the sensor transmitted data to the server 80 times in total. Since the conventional method requires communication of 200 times, the reduction rate results in (200-80)/200×100=60%. In conventional methods, the server communicates with the sensor 0 times. On the other hand, the present invention requires the server to transmit data of the predicted values for one period of the first half to the server 20 times and for one period of the second half 10 times. The total number of communications falls in 80+30=110 times; however, the number is still less than 200 times and reduced to (200-110)/200×100=45%. As a result, the present invention induces an increase in traffic from the server to the sensor; however, even if increased traffic is added, the present invention achieves 45% traffic reduction. The longer the same periodic operation continues, the more effective traffic reduction becomes.

The data communication system, the data communication method, the sensor and the sensor control device configured as described above can establish effective communications.

Although the aforementioned embodiment is configured to transmit data of the differences, the present invention is not limited thereto and can transmit data other than the differences to the server, for example, data of measured values, as they are, whose absolute values of the differences are determined to be greater than the first predetermined value. Alternatively, it is possible to transmit data to request generation of new predicted values of the measured values whose absolute values of the differences are determined to be greater than the first predetermined value.

Although differences are calculated by calculation means to determine data to be transmitted to the server based on the measured values and the predicted value; however, the present invention is not limited thereto. The data to be transmitted to the server can be determined by, for example, dividing the measured values by the predicted values, and evaluating if the calculation results are several percentages of the measured values or predicted value or more.

In the aforementioned embodiment, the server is configured to compare newly generated predicted values with a predetermined value to determine whether to transmit the data to the sensor based on the comparison results; however, the present invention is not limited thereto and allows the server to generate new predicted values and transmit all of the newly generated predicted values to the sensor.

The first and second predetermined values may be variable. For example, the first predetermined value can be set to a value of almost 0 at the initial stage of measurement and then can be changed into numbers figured out by a mean or variance approach according to the dispersion in the measured values.

In addition, the embodiment can be configured to transmit all of the data obtained in predetermined period from the start of the measurement in order to enhance the accuracy of the predicted values.

In addition, the embodiment employs wireless transmission; however, the present invention is not limited thereto and can wire the server and sensor to establish communications.

In the embodiment, the sensor can be configured to obtain measured values of an intended apparatus and generate predicted values in consideration of the age deterioration of the apparatus.

Although the embodiment uses a server as a control device for managing measurement data obtained by the sensor, the present invention is not limited thereto and can use other types of controlling devices capable of storing the data measured by the sensor and establishing bidirectional data communications.

In addition, in the embodiment, the given state to be measured by the sensor needs to be periodic; however, the present invention is not limited thereto and can measure states as long as the measured values obtained from the states increase or decrease for example.

The foregoing has described the embodiment of the present invention by referring to the drawings. However, the invention should not be limited to the illustrated embodiment. It should be appreciated that various modifications and changes can be made to the illustrated embodiment within the scope of the appended claims and their equivalents.

Industrial Applicability

The data communication system, data communication method, sensor and sensor control device according to the invention can be effectively used to meet the demand for efficient communications.

Reference Signs List

11: data communication system, 12: apparatus, 21: sensor, 22: measurement unit; 23, 32: measured-value generation unit; 24, 35: predicted-value generation unit, 25; 36: difference calculation unit; 26, 34: predicted-value retention unit; 27, 37: transmission unit; 28, 38: reception unit; 31: server; 33: measured-value storage unit; 41, 42, 44: dotted line; 43: solid line

**Claims**

1. A data communication system including a sensor measuring a given state and a sensor control device capable of communicating with the sensor,
   the sensor comprising:

   a measurement unit configured to measure a given state at a predetermined time;
   a predicted-value retention unit configured to retain a predicted value of the given state transmitted from the sensor control device;
   a calculation unit configured to calculate data to be transmitted to the sensor control device based on a measured value obtained by the measurement unit and the predicted value retained by the predicted-value retention unit; and
   a first transmission unit configured to transmit the data obtained by the calculation unit to the sensor control device, and

   the sensor control device comprising:

   a measured-value generation unit configured to generate the measured value obtained by the sensor based on the data transmitted from the first transmission unit and the predicted value;
   a storage unit configured to store the measured value generated by the measured-value generation unit;
   a predicted-value generation unit configured to generate a predicted value of a measured value to be measured next based on the measured value; and

a second transmission unit configured to transmit data of the predicted value generated by the predicted-value generation unit to the sensor.

2. The data communication system according to claim 1, wherein the sensor control device comprises a control unit configured to compare a new predicted value generated by the predicted-value generation unit and a predetermined value to determine whether to transmit data to the sensor based on the comparison result.

3. The data communication system according to claim 1, wherein the calculation unit calculates the difference between the measured value obtained by the measurement unit and the predicted value retained by the predicted-value retention unit, and
the measured-value generation unit generates the measured value from data of the difference.

4. The data communication system according to claim 1, wherein the second transmission unit calculates the difference between the predicted value generated by the predicted-value generation unit and the last predicted value and transmits data of the difference between the predicted values to the sensor, and
the predicted-value retention unit calculates a next predicted value from the data of the difference between the predicted values and retains the next predicted value.

5. The data communication system according to claim 1, wherein the predicted-value generation unit generates the predicted value according to weights assigned to the measured value.

6. A data communication method for transmitting data of measured values obtained by a sensor to a sensor control device, the method comprising the steps of:

measuring, by the sensor, a given state at a predetermined time;
retaining a predicted value of the given state transmitted from the sensor control device in the sensor;
calculating data to be transmitted to the sensor control device based on the measured value obtained in the measuring step and the predicted value retained in the predicted-value retaining step;
firstly transmitting the data obtained in the calculating step to the sensor control device;
generating, by the sensor control device, a measured value obtained by the sensor based on the data transmitted in the first transmitting step and the predicted value;
storing the measured value generated in the measured-value generating step;
generating a predicted value of a measured value to be measured next based on the measured value; and
secondly transmitting data of the predicted value generated in the predicted-value generating step to the sensor.

7. A sensor measuring a given state comprising:

a measurement unit configured to measure the given state at a predetermined time;
a predicted-value retention unit configured to retain a predicted value of the given state transmitted from a sensor control device capable of communicating with the sensor;
a calculation unit configured to calculate data to be transmitted to the sensor control device based on a measured value obtained by the measurement unit and the predicted value retained by the predicted-value retention unit; and
a transmission unit configured to transmit the data obtained by the calculation unit to the sensor control device.

8. A sensor control device capable of communicating with a sensor measuring a given state, comprising:

a measured-value generation unit configured to generate a measured value obtained by the sensor, upon reception of data transmitted from the sensor, based on the data and a predicted value;
a storage unit configured to store the measured value generated by the measured-value generation unit;
a predicted-value generation unit configured to generate a predicted value of a measured value to be measured next based on the measured value; and
a transmission unit configured to transmit data of the predicted value generated by the predicted-value generation unit to the sensor.

FIG.1

SENSOR ~21

| | |
|---|---|
| DIFFERENCE CALCULATION UNIT (25) | MEASUREMENT UNIT ~22 |
| PREDICTED-VALUE RETENTION UNIT (26) | MEASURED-VALUE GENERATION UNIT ~23 |
| TRANSMISSION UNIT (27) | PREDICTED-VALUE GENERATION UNIT ~24 |
| RECEPTION UNIT (28) | |

BIDIRECTIONAL COMMUNICATIONS

SERVER ~31

| | |
|---|---|
| PREDICTED-VALUE GENERATION UNIT (35) | MEASURED-VALUE GENERATION UNIT ~32 |
| DIFFERENCE CALCULATION UNIT (36) | MEASURED-VALUE STORAGE UNIT ~33 |
| TRANSMISSION UNIT (37) | PREDICTED-VALUE RETENTION UNIT ~34 |
| RECEPTION UNIT (38) | |

MEASUREMENT

APPARATUS ~12

FIG.2

```
                    ┌──────────┐
                    │  START   │
                    └────┬─────┘
 S11                     ▼
┌──────────────────────────────────────────────────┐
│         SENSOR PERFORMS MEASUREMENT               │  (SENSOR)
└──────────────────────────────────────────────────┘
 S12                     ▼
┌──────────────────────────────────────────────────┐
│        SENSOR GENERATES MEASURED VALUES           │  (SENSOR)
└──────────────────────────────────────────────────┘
 S13                     ▼
┌──────────────────────────────────────────────────┐  (SENSOR
│    SENSOR TRANSMITS ALL MEASURED VALUES TO SERVER │  → SERVER)
└──────────────────────────────────────────────────┘
 S14                     ▼
┌──────────────────────────────────────────────────┐
│SERVER GENERATES FIRST PREDICTED VALUES FROM THE RECEIVED MEASURED VALUES│ (SERVER)
└──────────────────────────────────────────────────┘
 S15                     ▼
┌──────────────────────────────────────────────────┐  (SERVER
│  SERVER TRANSMITS FIRST PREDICTED VALUES TO SENSOR│  → SENSOR)
└──────────────────────────────────────────────────┘
 S16                     ▼
┌──────────────────────────────────────────────────┐
│        SENSOR RETAINS FIRST PREDICTED VALUES      │  (SENSOR)
└──────────────────────────────────────────────────┘
```

S17  CONTINUE TO MEASURE?  —— NO

S18  ↓YES

SENSOR PERFORMS MEASUREMENT  (SENSOR)

S19

SENSOR GENERATES MEASURED VALUES  (SENSOR)

S20

SENSOR CALCULATES ABSOLUTE VALUES OF DIFFERENCES BETWEEN PRESENT PREDICTED VALUES AND GENERATED MEASURED VALUES  (SENSOR)

S21

SENSOR TRANSMITS DIFFERENCES OF ONLY MEASURED VALUES WHOSE ABSOLUTE VALUES OF DIFFERENCES ARE GREATER THAN FIRST PREDETERMINED VALUE TO SERVER  (SENSOR → SERVER)

S22

SERVER GENERATES MEASURED VALUES FROM THE TRANSMITTED DIFFERENCES AND STORES THE MEASURED VALUES  (SERVER)

S23

SERVER GENERATES THE NEXT PREDICTED VALUES BASED ON THE GENERATED MEASURED VALUES AND PRESENT PREDICTED VALUES  (SERVER)

S24

SERVER CALCULATES ABSOLUTE VALUES OF DIFFERENCES BETWEEN NEXT PREDICTED VALUES AND PRESENT PREDICTED VALUES  (SERVER)

S25

SERVER TRANSMITS DIFFERENCE VALUES OF ONLY PREDICTED VALUES WHOSE ABSOLUTE VALUES OF DIFFERENCES ARE GREATER THAN SECOND PREDETERMINED VALUE TO SENSOR  (SERVER → SENSOR)

S26

SENSOR GENERATES NEXT PREDICTED VALUES FROM THE RECEIVED DIFFERENCE VALUES  (SENSOR)

S27

SENSOR RETAINS THE NEXT PREDICTED VALUES  (SENSOR)

┌──────────┐
│   END    │
└──────────┘

# FIG.3

SENSOR                                                                SERVER

TRANSMIT DATA OF ALL MEASURED VALUES,
BECAUSE THERE ARE NO PREDICTED VALUES

TRANSMIT DIFFERENCES BETWEEN PRESENT
PREDICTED VALUES AND NEXT PREDICTED VALUES
*BECAUSE THERE ARE NO PRESENT PREDICTED VALUES,
THE DIFFERENCE IS TRANSMITTED (FULL TRANSMISSION)

GENERATE VALUES (=MEASURED VALUES)
GENERATE NEXT PREDICTED VALUES

GENERATE NEXT PREDICTED VALUES
*BECAUSE THERE ARE NO PRESENT
PREDICTED VALUES, NEXT PREDICTED
VALUES ARE GENERATED BASED ON
THE TRANSMITTED DIFFERENCES
(FULL TRANSMISSION)

    PERFORM MEASUREMENT
    COMPARE MEASUREMENT VALUES
    WITH PRESENT PREDICTED VALUES

TRANSMIT ONLY MEASURED VALUES
DIFFERENT FROM PRESENT PREDICTED VALUES

GENERATE VALUES BASED ON PRESENT
PREDICTED VALUES AND MEASURED VALUES
GENERATE NEXT PREDICTED VALUES
GENERATE DIFFERENCES BETWEEN PRESENT
PREDICTED VALUES AND NEXT PREDICTED
VALUES

TRANSMIT DIFFERENCES BETWEEN PRESENT
PREDICTED VALUES AND NEXT PREDICTED VALUES

GENERATE NEXT PREDICTED VALUES
*BECAUSE THERE ARE PRESENT PREDICTED
VALUES, NEXT PREDICTED VALUES ARE
GENERATED BASED ON PRESENT
PREDICTED VALUES AND TRANSMITTED
DIFFERENCE

    PERFORM MEASUREMENT
    COMPARE MEASUREMENT VALUES
    WITH PRESENT PREDICTED VALUES

TRANSMIT ONLY MEASURED VALUES
DIFFERENT FROM PRESENT PREDICTED VALUES

THE SAME STEPS ARE REPEATED

FIG.4

SENSOR

SERVER

MEASURED VALUE

MEASURED VALUE

$D_9$ $D_{10}$ $D_{11}$ $D_{12}$ $D_{13}$ $D_{14}$

$D_8$

$D_7$

$D_6$

$D_5$

$D_4$

$D_3$

$D_2$

$D_1$

$D_{15}$

$D_{16}$

Tz

Tx

Ty

ELAPSED TIME

ELAPSED TIME

FIG.5

SENSOR

MEASURED
VALUE

ELAPSED
TIME

SERVER

MEASURED
VALUE

41

ELAPSED
TIME

EP 2 463 841 A1

## FIG.6

SENSOR

MEASURED VALUE

42

ELAPSED TIME

SERVER

MEASURED VALUE

41

ELAPSED TIME

EP 2 463 841 A1

FIG.7

FIG.8

SENSOR

SERVER

FIG.9

FIG.10

SENSOR

SERVER

MEASURED VALUE

MEASURED VALUE

ELAPSED TIME

ELAPSED TIME

44

43

EP 2 463 841 A1

# FIG.11

SENSOR

SERVER

MEASURED VALUE

MEASURED VALUE

$B_2$

$B_1$

ELAPSED TIME

ELAPSED TIME

EP 2 463 841 A1

# FIG.12

SENSOR

SERVER

EP 2 463 841 A1

FIG.13

FIG.14

FIG.15

FIG.16

FIG.17

FIG.18

## FIG.19

```
                    ┌─────────────┐
                    │    START    │
                    └──────┬──────┘
                           │
       ┌──────────────────>│
  S101 │            ┌───────▼───────────────┐
       │            │  SENSOR PERFORMS       │
       │            │  MEASUREMENT           │
       │            └───────────────────────┘
  S102 │            ┌───────▼───────────────┐
       │            │  SENSOR GENERATES      │
       │            │  MEASURED VALUES       │
       │            └───────────────────────┘
  S103 │            ┌───────▼───────────────┐
       │            │  SENSOR TRANSMITS THE  │
       │            │  MEASURED VALUES TO    │
       │            │  SERVER                │
       │            └───────────────────────┘
  S104 │            ┌───────▼───────────────┐
       │            │ SERVER RECEIVES THE    │
       │            │ MEASURED VALUES        │
       │            │ TRANSMITTED FROM SENSOR│
       │            └───────────────────────┘
  S105 │            ┌───────▼───────────────┐
       │            │ SERVER STORES THE      │
       │            │ RECEIVED MEASURED VALUES│
       │            └───────────────────────┘
       │               S106  ▼
       │                  ╱───────╲
       │                 ╱ CONTINUE ╲   NO
       │                 ╲TO MEASURE?╱──────┐
       │                  ╲───────╱         │
       │                    │YES            │
       └────────────────────┘          ┌────▼────┐
                                        │   END   │
                                        └─────────┘
```

| **INTERNATIONAL SEARCH REPORT** | International application No. |
|---|---|
| | PCT/JP2010/052346 |

**A. CLASSIFICATION OF SUBJECT MATTER**
*G08C15/00*(2006.01)i

According to International Patent Classification (IPC) or to both national classification and IPC

**B. FIELDS SEARCHED**

Minimum documentation searched (classification system followed by classification symbols)
G08C13/00-25/04

Documentation searched other than minimum documentation to the extent that such documents are included in the fields searched
Jitsuyo Shinan Koho          1922-1996   Jitsuyo Shinan Toroku Koho    1996-2010
Kokai Jitsuyo Shinan Koho    1971-2010   Toroku Jitsuyo Shinan Koho    1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-171250 A (Toyota Motor Corp.), 30 July 2009 (30.07.2009), paragraphs [0017] to [0098]; fig. 1 to 6 (Family: none) | 1-8 |
| A | JP 5-197892 A (Fujitsu Ltd.), 06 August 1993 (06.08.1993), paragraphs [0015] to [0052]; fig. 1 to 3 (Family: none) | 1-8 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 March, 2010 (29.03.10) | 06 April, 2010 (06.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 463 841 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3201631 A

- JP 2008059302 A